# EUROPEAN PATENT APPLICATION

(11) **EP 4 817 699 A2**
(43) Date of publication of application: **07.10.2026**
(21) Application number: 26199847.0
(22) Date of filing: 15.07.2024
(51) Int. Cl.: A63B 26/00

(54) **FIXING SET**

(30) Priority: 12.10.2023 CN 202311326313; 21.12.2023 CN 202323493137 U; 22.12.2023 CN 202323528681 U; 09.01.2024 CN 202420048001 U; 19.03.2024 CN 202420539540 U; 26.04.2024 CN 202420890130 U; 05.06.2024 CN 202421277069 U; 06.06.2024 CN 202421292866 U
(62) Document number(s) of the earlier application(s) in accordance with Art. 76 EPC: 24806704.3 / 4 714 509
(71) Applicant: Beyond Power Inc., Shenzhen, Guangdong 518114 (CN)
(72) Inventor: ZHOU, Changxing, Shenzhen, 518114 (CN); HUANG, Sirong, Shenzhen, 518114 (CN); CHEN, Juncheng, Shenzhen, 518114 (CN); PAN, Hongtao, Shenzhen, 518114 (CN); ZUO, Qianbin, Shenzhen, 518114 (CN); LIANG, Junjie, Shenzhen, 518114 (CN); CAI, Xing, Shenzhen, 518114 (CN); LAN, Qiu, Shenzhen, 518114 (CN); HE, Jinheng, Shenzhen, 518114 (CN); CHANG, Wenxin, Shenzhen, 518114 (CN)
(74) Representative: De Arpe Tejero, Manuel

(57) **Abstract**

A flexible fixing apparatus is provided. The flexible fixing apparatus includes a connecting seat (i100) and a tightening assembly (i300). The connecting seat (i100) is configured to mount a fitness apparatus. The tightening assembly (i300) includes a handle (i400), a reel (i310), a first one-way transmission assembly (i330), and a second one-way transmission assembly (i350). One end of the cord or strap (i200) is configured to be wound around and secured to the reel (i310), the reel (i310) is connected to the connecting seat (i100) via the first one-way transmission assembly (i330), and the handle (i400) is in transmission connection with the reel (i310) via the second one-way transmission assembly (i350).

## Description

### TECHNICAL FIELD

The present disclosure relates to the technical field of fitness device accessories, and in particular, to a flexible fixing apparatus.

### BACKGROUND

When a fitness device is in use, a user interacts with the fitness device, utilizing the power of the fitness device or overcoming the resistance of the fitness device to perform exercise. In the related art, the fitness device usually needs to be fixed. The fixation of the device in the related art is relatively rigid, requiring a base to be provided for the fitness device, or the fitness device to be fixed on a dedicated gantry.

However, any mounting method can only accommodate a single mounting scenario or a limited number of mounting scenarios. For example, the installation of a gantry can be performed only within a frame of the gantry and cannot be performed away from the gantry. The installation expansion of the fitness device is limited and does not meet the increasingly diverse fitness needs of users.

### SUMMARY OF THE INVENTION

The present disclosure provides a flexible fixing apparatus that can adapt to increasingly diverse fitness needs of users.

A flexible fixing apparatus according to an embodiment of the present disclosure includes a connecting seat and a tightening assembly. The connecting seat is configured to mount a fitness apparatus or is provided with a mounting seat for mounting the fitness apparatus. The connecting seat is configured to connect to opposite ends of a cord or strap wrapped around an external environment. The tightening assembly includes a handle, a reel, a first one-way transmission assembly, and a second one-way transmission assembly. One end of the cord or strap is configured to be wound around and secured to the reel, the reel is connected to the connecting seat via the first one-way transmission assembly, and the handle is in transmission connection with the reel via the second one-way transmission assembly. When the handle is rotated in a forward direction, the handle drives the reel to rotate via the second one-way transmission assembly to tighten the cord or strap. When the handle is rotated in a reverse direction, the second one-way transmission assembly is disengaged, allowing the handle to be reset, and the first one-way transmission assembly allows rotation in a tightening direction and locks rotation in the reverse direction.

Additional aspects and advantages of the present disclosure will be partly given in the following description, and will partly become apparent from the following description, or will be learned through the practice of the present disclosure.

### BRIEF DESCRIPTION OF THE DRAWINGS

The above and/or additional aspects and advantages of the present disclosure will become apparent and easily understood from the description of the embodiments in conjunction with the following accompanying drawings.
FIG. 1 is a perspective structural view of a flexible fixing apparatus when a connecting seat is not tightened according to an embodiment of the present disclosure.
FIG. 2 is a perspective structural view of a flexible fixing apparatus when a connecting seat is tightened according to an embodiment of the present disclosure.
FIG. 3 is a perspective structural view of a flexible fixing apparatus according to another embodiment of the present disclosure.
FIG. 4 is a partial schematic diagram of a one-way transmission assembly of a flexible fixing apparatus according to another embodiment of the present disclosure.
FIG. 5 is a partial schematic diagram of a clutch assembly of a flexible fixing apparatus according to another embodiment of the present disclosure.
FIG. 6 is a schematic diagram of a flexible fixing apparatus according to yet another embodiment of the present disclosure.
FIG. 7 is a schematic diagram of a flexible fixing apparatus and a fixing block according to yet another embodiment of the present disclosure.
FIG. 8 is a schematic structural diagram of a flexible fixing apparatus when a cam wrench is not unlocked according to yet another embodiment of the present disclosure.
FIG. 9 is a schematic structural diagram of a flexible fixing apparatus when a cam wrench is unlocked according to yet another embodiment of the present disclosure.
FIG. 10 is a schematic structural diagram of a four-bar linkage tightening assembly of yet another flexible fixing apparatus according to the present disclosure.

### DETAILED DESCRIPTION OF EMBODIMENTS

Embodiments of the present disclosure are described in detail below, and examples of the embodiments are shown in accompanying drawings, wherein the same or similar reference numerals represent the same or similar elements or elements having the same or similar functions. The embodiments described below with reference to the accompanying drawings are illustrative and are intended to explain the present disclosure and should not be construed as limiting the present disclosure.

In the description of the present disclosure, it should be understood that terms such as "center", "longitudinal", "transverse/lateral", "length", "width", "thickness", "up", "down", "front", "back", "left", "right", "vertical", "horizontal", "top", "bottom", "inner", "outer", "clockwise", "counterclockwise", etc., indicate orientations or positional relationships based on orientations or positional relationships shown in the accompanying drawings. These terms are used only for the convenience of describing the present disclosure and simplifying the description, and are not intended to indicate or imply that an apparatus or an element must have a specific orientation, be constructed and operated in a specific orientation, and therefore should not be construed as limiting the present disclosure. Additionally, terms such as "first" and "second" are used for descriptive purposes only and should not be construed as indicating or implying relative importance or implicitly indicating the number of technical features. Thus, features defined by "first" and "second" may explicitly or implicitly include one or more of the features. In the description of the present disclosure, the term "plurality of" means two or more, unless otherwise clearly and specifically defined.

In the description of the present disclosure, it should be noted that unless otherwise defined explicitly and specifically, terms such as "mount", "couple", "connect" should be understood broadly. For example, they may be a fixed connection, a detachable connection, or an integral connection; or may be a mechanical connection, an electrical connection, or mutual communication; or may be a direct connection or an indirect connection through an intermediate media, or may be an internal connection of two elements or an interaction relationship between two elements. For those having ordinary skill in the art, specific meanings of the foregoing terms in the present disclosure may be understood according to specific situations.

In the present disclosure, unless otherwise defined explicitly and specifically, a first feature being "above" or "below" a second feature may include the first feature and the second feature being in direct contact, or may include the first and second features not being in direct contact but being in contact through an additional feature between them. Moreover, a first feature being "above", "upward", and "on" a second feature may include the first feature being directly above and obliquely above the second feature, or may only indicate that the first feature has a higher horizontal height than the second feature. A first feature being "below", "beneath" and "underneath" the second feature includes the first feature being directly below and obliquely below the second feature, or only indicates that the first feature has a smaller horizontal height than the second feature.

The following disclosure provides many different embodiments or examples to implement different structures of the present disclosure. To simplify the disclosure of the present disclosure, components and arrangements of specific embodiments are described below. Of course, these are only examples and are not intended to limit the present disclosure. Additionally, the present disclosure may repeat reference numerals and/or reference letters in different embodiments for the purpose of simplicity and clarity, which does not indicate a relationship between the various embodiments and/or arrangements discussed. Furthermore, the present disclosure provides embodiments of various specific processes and materials, but those having ordinary skill in the art may be aware of the application of other processes and/or the use of other materials.

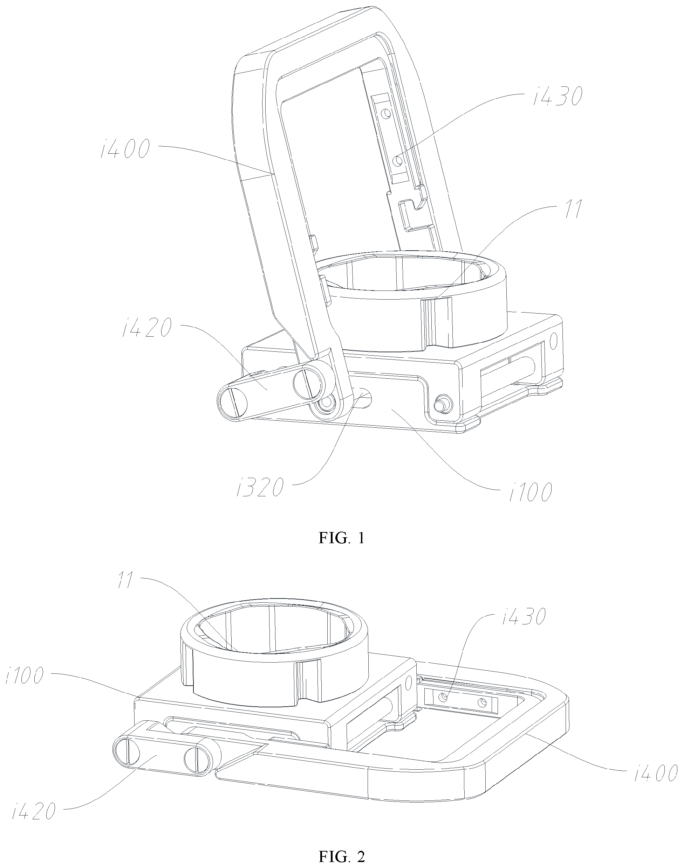

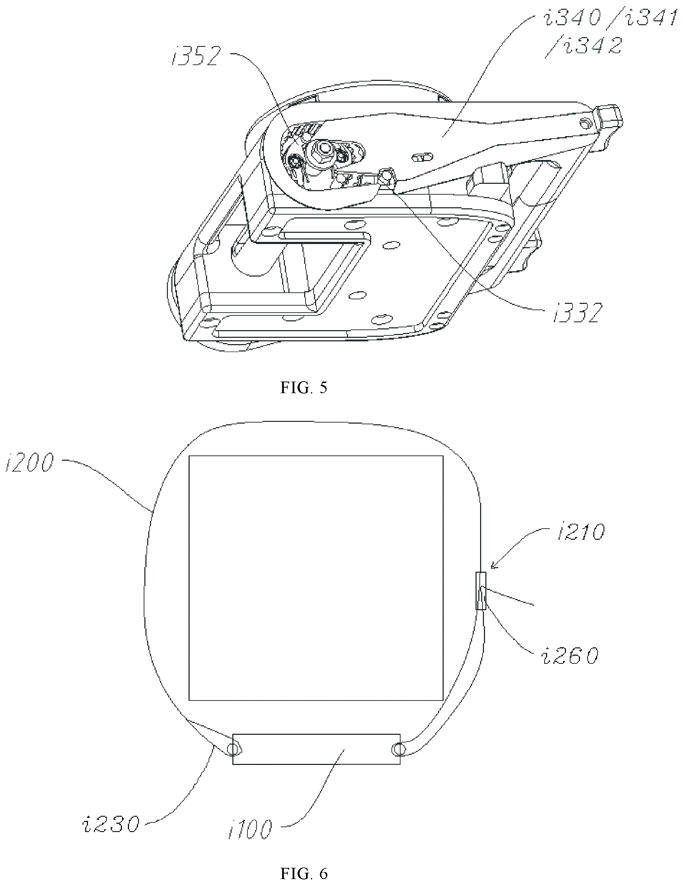

The present disclosure discloses a flexible fixing apparatus. The flexible fixing apparatus may be flexible. Specifically as shown in FIGS. 1-10, the flexible fixing apparatus includes a connecting seat i100, the connecting seat i100 being configured to mount the fitness device or massage device, or the connecting seat i100 being provided with a mounting seat 11 for mounting the fitness device or massage device or other fixing apparatuses; and a cord or strap i200 with opposite ends wrapped around the external environment and connected to the connecting seat i100. The fixation is achieved by wrapping the cord or strap i200 around the external environment, such as a gantry, a column, a tree trunk, or other regular or irregular objects, and tightening the cord or strap i200.

The cord or strap i200 needs to be tightened or pre-tightened to complete fixation to the external environment. The tightening or pre-tightening method can be configured to tighten or pre-tighten the cord or strap i200 using a tightening assembly i300, or to tighten or pre-tighten the cord or strap i200 via a length adjustment assembly i210, or to make the cord or strap i200 have a certain elasticity so that a rebound force generated after the cord or strap i200 is extended completes the tightening or pre-tightening. Of course, the above solutions can also be combined with each other. For example, both a tightening assembly i300 and a length adjustment assembly i210 are provided. When tightening, the length adjustment assembly i210 is first used to tighten the cord or strap i200, and then the tightening assembly i300 is used to generate a large pre-tightening force to complete the tightening. For another example, both a length adjustment assembly i210 is provided and the cord or strap i200 has elasticity, and the elasticity is used to perform pre-tightening, and then the length adjustment assembly i210 is used to tighten. For yet another example, a tightening assembly i300 is provided, the cord or strap i200 is elastic, and a length adjustment assembly i210 is provided; the length adjustment assembly i210 and the elastic cord or strap i200 are used for pre-tightening, and then the cord or strap i200 is tightened by the tightening assembly i300.

In some embodiments, there are a plurality of cords or straps i200. Some of the cords or straps i200 are tightened to fix the connecting seat i100, and some of the cords or straps i200 are configured to wrap around the external environment to provide protection for the tightened and fixed cords or straps i200, preventing the connecting seat i100 from slipping due to fixation failure.

In some embodiments, the cord or strap i200 is split in the middle and connected to each other via a quick-connect connector i230. Through the middle quick-connect connector i230, during installation, the user can separate the cord or strap i200 at the quick-connect connector i230, and after passing the cord or strap i200 around the external environment, couple the cord or strap i200 via the quick-connect connector i230, thereby improving the convenience of installation and the versatility for the installation environment. In some embodiments, one end of the cord or strap i200 is quickly connected to the connecting seat i100. For example, as shown in FIG. 1, FIG. 2, FIG. 5, and FIG. 6, the connecting seat i100 is provided with a columnar structure for the cord or strap i200 to pass through or wrap around, so that the cord or strap i200 can pass through the structure after being wrapped around to complete the quick connection with the connecting seat i100. In some embodiments, one end of the cord or strap i200 can also be connected to the connecting seat i100 via a quick-connect connector i230, which can also improve the convenience of installation and the versatility for the installation environment.

In some embodiments, the quick-connect connector includes a first coupling joint i231 and a second coupling joint i232. The first coupling joint i231 and the second coupling joint i232 are respectively connected to the two sections of the cord or strap i200 at the split position, or one of the first coupling joint i231 and the second coupling joint i232 is connected to an end portion of the cord or strap i200, and the other is provided on the connecting seat i100. Through the quick coupling and separation of the first coupling joint i231 and the second coupling joint i232, the cord or strap i200 is quickly connected or disconnected, or the cord or strap i200 is quickly connected or disconnected with the connecting seat i100. Exemplarily, the first coupling joint i231 and the second coupling joint i232 may be male-female coupling buckles, or corresponding connectors and joints, or insert buckles or side-release buckles, or hook buckles or lobster buckles and corresponding connecting rings, or any existing quick-connect coupling joints in the field.

In some embodiments, the flexible fixing apparatus further includes an extension cord i240 or an extension strap i250, and opposite ends of the extension cord i240 or extension strap i250 are respectively connected to a first coupling joint i231 and a second coupling joint i232. That is, when the cord or strap i200 is not long enough, the extension cord i240 or the extension strap i250 can be connected to one end of the cord or strap. At this time, a first connector or a second connector at one end of the extension cord i240 or extension strap i250 is connected to the second connector or the first connector at one end of the cord or strap i200; an opposite end is connected to the cord or strap i200 or to the connecting seat i100 according to the applicable situation.

In some embodiments, the tightening assembly i300 includes a reel i310. One end of the cord or strap i200 is wound around and secured to the reel i310, and the reel i310 rotates to wind up and tighten the cord or strap i200. At this time, the reel i310 can be rotated to increase or shorten the part of the cord or strap i200 wound around the reel i310, thereby tightening or loosening the cord or strap i200.

In some embodiments, the tightening assembly i300 includes a movably disposed tightening member i320, and one end of the cord or strap i200 is connected to the tightening member i320, the tightening member i320 movably tightens the cord or strap i200. The shape of the tightening member i320 is not limited. As shown in FIG. 1 and FIGS. 6-10, the tightening member i320 can be a shaft or a block structure. The connection between the cord or strap i200 and the tightening member i320 can be a fixed connection, a winding or surrounding connection, a hanging connection, or any other existing connection methods with the cord or strap i200.

Furthermore, the flexible fixing apparatus also includes a handle i400. The handle i400 can drive the reel i310 to rotate, increase the torque, amplify the force applied by the user, and thus achieve a better tightening effect. In some embodiments, the handle i400 is connected to the reel i310 to drive the reel i310 to rotate. In some embodiments, the handle i400 is connected to the tightening member i320 to drive the tightening member i320 to move.

In some embodiments, the reel i310 is connected to the connecting seat i100 via a first one-way transmission assembly i330. The first one-way transmission assembly i330 allows rotation in a tightening direction and locks rotation in a reverse direction. Adding the first one-way transmission assembly i330 can make a tightening shaft directly locked after rotation. At this time, the force of rotating the tightening shaft is removed, and the tightening shaft can also generate a tightening force.

Furthermore, the flexible fixing apparatus also includes a clutch assembly i340. The clutch assembly i340 is configured to release the lock of the first one-way transmission assembly i330. That is, when the user needs to remove the fixing apparatus, the one-way lock can be released through the clutch assembly i340 to complete the unlocking.

Furthermore, the flexible fixing apparatus also includes a second one-way transmission assembly i350. The second one-way transmission assembly i350 allows the handle i400 to drive the reel i310 to rotate in one direction, but cannot drive the reel i310 to rotate in a reverse direction.

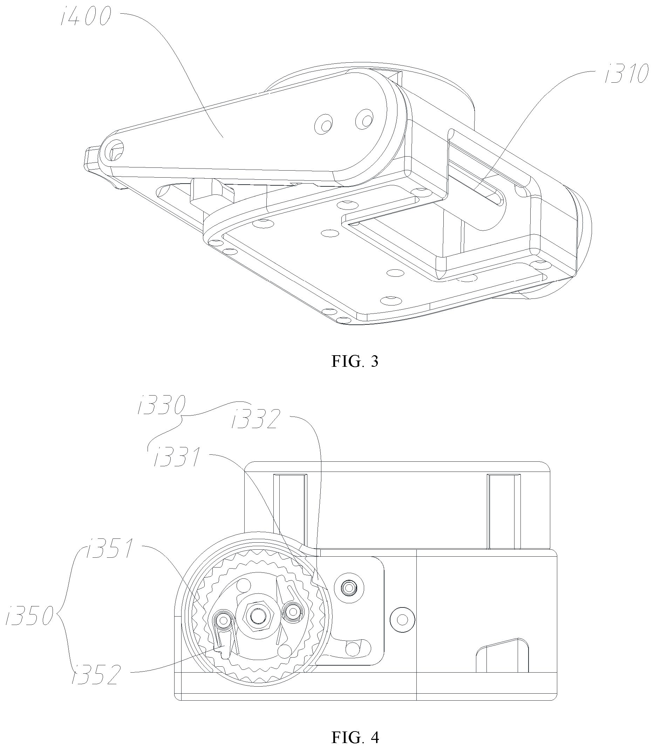

For example, as shown in FIGS. 3-5, the cord or strap i200 is connected to the reel i310, an end portion of the reel i310 is connected to the connecting seat i100 via a first one-way transmission assembly i330, and the handle i400 is in transmission connection with the first one-way transmission assembly i330. Rotating the handle i400 can drive the reel i310 to rotate via the first one-way transmission assembly i330. When the handle i400 is released, the reel i310 can remain non-rotating, thereby providing a tightening force. In an embodiment, the first one-way transmission assembly i330 includes an outer ratchet i331 and an outer pawl i332; the handle i400 is in transmission connection with the reel i310 via a second one-way transmission assembly i350. That is, the handle i400 is rotated outward to drive the reel i310 to rotate, and then the cord or strap is wound. When the handle i400 is rotated in a reverse direction, the second one-way transmission assembly i350 is separated, and the handle i400 can be reset, and then is rotated forward again, further driving the reel i310 to rotate. In an embodiment, the second one-way transmission assembly i350 includes an inner ratchet i351 and an inner pawl i352; the clutch assembly i340 includes protrusions i342 respectively disposed on the inner pawl i352 and the outer pawl i332, and an unlocking bar i341. By pressing the unlocking bar i341 to act on the protrusions i342, the inner pawl i352 and the outer pawl i332 are driven to rotate, making the first one-way transmission assembly and the second one-way transmission assembly ineffective.

In some embodiments, the handle i400 includes a cam wrench i410. The cam wrench i410 is rotatably connected to the tightening member i320. As the cam wrench i410 rotates, the minimum distance between the tightening member i320 and the connecting seat i100 gradually increases or decreases. The tightening member i320 is allowed to slide in the connecting seat i100. When the cam wrench i410 rotates until its protruding portion passes through the tightening member i320, the tightening member i320 is pushed to a limit position in the connecting seat i100, thereby providing a tightening force.

In some embodiments, the handle i400 forms a four-bar linkage i421 with the connecting member and the connecting seat i100 via a link i420. The tightening member i320 is driven to move by moving the handle i400. Furthermore, when the handle i400 rotates to be close to the connecting seat i100, the four-bar linkage i421 composed of the connecting seat i100, the handle i400, the tightening member i320, and the link i420 passes over a dead point, achieving self-locking to prevent disengagement.

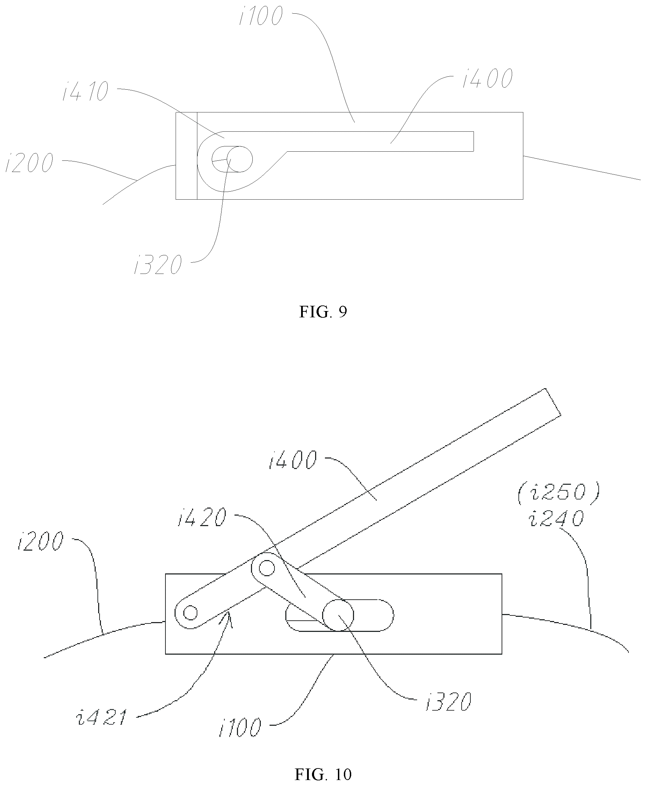

For example, as shown in FIG. 1 and FIG. 2, an end portion of the handle i400 is hinged to the tightening member i320, and the middle is hinged to the link i420, and the link i420 is hinged to the connecting seat i100. At this time, when the handle i400 is rotated until a hinge shaft of the connecting seat i100 is located on a line connecting hinge points of the link i420, the linkage formed by the link i420 is at a dead point. For another example, as shown in FIG. 10, an end portion of the handle i400 is hinged to the connecting seat i100, and the middle is sequentially hinged to the tightening member i320 via the link i420, and the tightening member i320 moves on the connecting seat i100. At this time, when the handle i400 is rotated until a hinge point between the handle i400 and the link i420 is located on a line connecting a rotation center of the handle i400 and a hinge point between the link i420 and the tightening member i320, the linkage formed by the link i420 is at a dead point.

In some embodiments, by providing a handle locking assembly i430, the rotation of the handle i400 can be locked or unlocked, and then the tightening member i320 or the reel i310 can be locked via the handle i400. For example, as shown in FIG. 1 and FIG. 2, the handle locking assembly i430 locks the handle i400 when the handle i400 is rotated to be flush with the connecting seat i100. When unlocking, press the handle locking assembly i430, and a hook at the bottom will disengage from the handle i400. At this time, the handle i400 can be rotated to unlock the flexible fixing apparatus.

In some embodiments, there are a plurality of cords or straps i200. The cord or strap i200 is quickly connected to or detached from the connecting seat i100. Lengths of the plurality of cords or straps i200 are different, and the user can select cords or straps i200 of corresponding lengths according to actual usage conditions.

In some embodiments, the cord or strap i200 is provided with an adjusting buckle i260 for adjusting the length, which can specifically be a barrel buckle, a ladder buckle, or any other buckle that can adjust the length. The adjusting buckle i260 can tighten the cord or strap i200, and can also make the cord or strap i200 adapt to more installation environments.

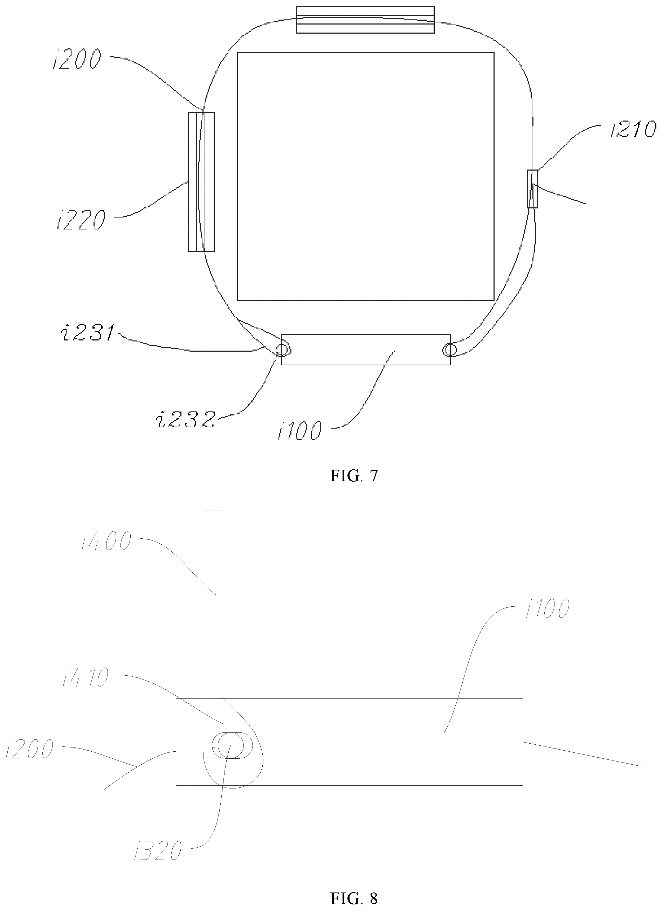

In some embodiments, as shown in FIG. 7, a fixing block i220 can be slidably disposed on or secured to the cord or strap i200. When the cord or strap i200 is tensioned, the fixing block i220 can also provide more stable pressure. The position of the fixing block i220 slidably disposed on the cord or strap i200 can be adjusted to be suitable for different installation environments. By adjusting the position on the cord or strap i200, the fixing block i220 is located on a plane of the installation environment for fixation. A plurality of fixing blocks i220 can be provided to adapt to a plurality of planes of the installation environment. Users can also select the fixing block i220 according to their needs. Furthermore, the fixing block i220 is provided with a slot or a hole. Users can insert a retaining pin into the slot or the hole as needed to act on the external environment, further preventing the fixing apparatus from accidentally slipping.

In some embodiments, a magnetic block or an anti-slip block can be slidably disposed on or secured to the cord or strap i200, which can increase the force between the cord or strap i200 and the external environment. The magnetic block also has an adsorption effect, which can prevent the flexible fixing apparatus from slipping from the external environment when not tensioned. Users can also select the magnetic block or power-assisting block according to their needs. In some embodiments, a magnetic block or an anti-slip block can also be provided on an inner side of the connecting seat i100, and the anti-slip block is provided on a surface, and the magnetic blocks are provided on a surface or inside an inner side of the connecting seat i100, which can also increase the force between the connecting seat i100 and the external environment, ensuring more stable connection when tensioned and preventing the flexible fixing apparatus from accidentally slipping when not tensioned.

In the description of this specification, reference to terms such as "an embodiment", "some embodiments", "exemplary embodiments", "example", "specific example", or "some examples" means that specific features, structures, materials, or characteristics described in conjunction with the embodiment or example are included in at least one embodiment or example of the present disclosure. In this specification, the schematic expressions of the above terms do not necessarily refer to the same embodiment or example. Moreover, the specific features, structures, materials, or characteristics described may be combined in any suitable manner in any one or more embodiments or examples.

Although the embodiments of the present disclosure have been shown and described, those having ordinary skill in the art will appreciate that various changes, modifications, substitutions, and variations may be made to the embodiments without departing from the principles and intent of the present disclosure, and the scope of the present disclosure is defined by the claims and their equivalents.

## Claims

1. A flexible fixing apparatus, comprising:
a connecting seat (i100) configured to mount a fitness apparatus or provided with a mounting seat (11) for mounting the fitness apparatus, wherein the connecting seat (i100) is configured to connect to opposite ends of a cord or strap (i200) wrapped around an external environment; and
a tightening assembly (i300), comprising a handle (i400), a reel (i310), a first one-way transmission assembly (i330), and a second one-way transmission assembly (i350);
wherein one end of the cord or strap (i200) is configured to be wound around and secured to the reel (i310), the reel (i310) is connected to the connecting seat (i100) via the first one-way transmission assembly (i330), and the handle (i400) is in transmission connection with the reel (i310) via the second one-way transmission assembly (i350);
wherein when the handle (i400) is rotated in a forward direction, the handle (i400) drives the reel (i310) to rotate via the second one-way transmission assembly (i350) to tighten the cord or strap (i200); and
when the handle (i400) is rotated in a reverse direction, the second one-way transmission assembly (i350) is disengaged, allowing the handle (i400) to be reset, and the first one-way transmission assembly (i330) allows rotation in a tightening direction and locks rotation in the reverse direction.

2. The flexible fixing apparatus according to claim 1, further comprising a clutch assembly (i340) configured to release the lock of the first one-way transmission assembly (i330).

3. The flexible fixing apparatus according to claim 2, wherein the first one-way transmission assembly (i330) comprises an outer ratchet (i331) and an outer pawl (i332), the second one-way transmission assembly (i350) comprises an inner ratchet (i351) and an inner pawl (i352);
wherein the clutch assembly (i340) comprises protrusions (i342) respectively disposed on the inner pawl (i352) and the outer pawl (i332), and an unlocking bar (i341);
wherein by pressing the unlocking bar (i341) to act on the protrusions (i342), the inner pawl (i352) and the outer pawl (i332) are driven to rotate, thereby disengaging the first one-way transmission assembly (i330) and the second one-way transmission assembly (i350).

4. The flexible fixing apparatus according to claim 1, further comprising a length adjustment assembly (i210) and the cord or strap (i200);
wherein the length adjustment assembly (i210) is disposed on the cord or strap (i200) and configured to pre-tighten the cord or strap (i200).

5. The flexible fixing apparatus according to claim 4, wherein the length adjustment assembly (i210) comprises an adjusting buckle (i260) disposed on the cord or strap (i200) and configured to adjust a length of the cord or strap (i200).

6. The flexible fixing apparatus according to claim 1, further comprising the cord or strap (i200), and at least one of a fixing block (i220), a magnetic block, or an anti-slip block, wherein the at least one of the fixing block (i220), the magnetic block, or the anti-slip block is slidably disposed on or secured to the cord or strap (i200).

7. The flexible fixing apparatus according to claim 1, wherein the flexible fixing apparatus comprises at least one of the following:
a magnetic block provided on an inner surface or inside of the connecting seat (i100); or
an anti-slip block provided on an inner side of the connecting seat (i100).

8. The flexible fixing apparatus according to claim 1, further comprising the cord or strap (i200), wherein opposite ends of the cord or strap (i200) are wrapped around an external environment and connected to the connecting seat (i100);
wherein the flexible fixing apparatus is configured for quick connection by at least one of the following:
the cord or strap (i200) is split in the middle and connected to each other via a quick-connect connector (i230);
one end of the cord or strap (i200) is quickly connected to the connecting seat (i100); or
one end of the cord or strap (i200) is connected to the connecting seat (i100) via a quick-connect connector (i230).

9. The flexible fixing apparatus according to claim 8, wherein the quick-connect connector (i230) comprises a first coupling joint (i231) and a second coupling joint (i232);
wherein the first coupling joint (i231) and the second coupling joint (i232) are respectively connected to the two sections of the cord or strap (i200) at the split position; or one of the first coupling joint (i231) and the second coupling joint (i232) is connected to an end portion of the cord or strap (i200), and the other is provided on the connecting seat (i100);
wherein the flexible fixing apparatus further comprises an extension cord (i240) or an extension strap (i250), and opposite ends of the extension cord (i240) or the extension strap (i250) are respectively connected to the first coupling joint (i231) and the second coupling joint (i232).

10. The flexible fixing apparatus according to claim 8, wherein there are a plurality of cords or straps (i200), and the cord or strap (i200) is quickly connected to or detached from the connecting seat (i100).

11. The flexible fixing apparatus according to claim 1, further comprising the cord or strap (i200), wherein opposite ends of the cord or strap (i200) are wrapped around an external environment and connected to the connecting seat (i100).

12. The flexible fixing apparatus according to claim 11, further comprising a clutch assembly (i340) configured to release the lock of the first one-way transmission assembly (i330).

13. The flexible fixing apparatus according to claim 12, wherein the first one-way transmission assembly (i330) comprises an outer ratchet (i331) and an outer pawl (i332), the second one-way transmission assembly (i350) comprises an inner ratchet (i351) and an inner pawl (i352);
wherein the clutch assembly (i340) comprises protrusions (i342) respectively disposed on the inner pawl (i352) and the outer pawl (i332), and an unlocking bar (i341);
wherein by pressing the unlocking bar (i341) to act on the protrusions (i342), the inner pawl (i352) and the outer pawl (i332) are driven to rotate, thereby disengaging the first one-way transmission assembly (i330) and the second one-way transmission assembly (i350).

14. The flexible fixing apparatus according to claim 11, wherein there are a plurality of cords or straps (i200), and the flexible fixing apparatus comprises at least one of the following features:
some of the plurality of cords or straps (i200) are tightened to fix the connecting seat (i100) and some of the plurality of cords or straps (i200) are configured to wrap around the external environment; or
lengths of the plurality of cords or straps (i200) are different.

15. The flexible fixing apparatus according to claim 1, further comprising a handle locking assembly (i430) configured to lock or unlock rotation of the handle (i400);
wherein the handle locking assembly (i430) locks the handle (i400) when the handle (i400) is rotated to be flush with the connecting seat (i100), and a hook at the bottom of the handle locking assembly (i430) disengages from the handle (i400) when the handle locking assembly (i430) is pressed.
